# EUROPÄISCHE PATENTANMELDUNG

(11) **EP 3 778 359 A1**
(43) Veröffentlichungstag der Anmeldung: **17.02.2021**
(21) Anmeldenummer: 20182184.0
(22) Anmeldetag: 25.06.2020
(51) Int. Cl.: B62J 6/028, F21S 41/143, F21S 41/255, F21S 41/265, F21S 41/20, F21S 41/29, F21S 41/19, F21S 41/151, B62J 6/024, B62J 6/16

(54) **FAHRRADLAMPEN-LICHTVERTEILUNGSSYSTEM UND FAHRRADLAMPE MIT EINEM SOLCHEN FAHRRADLAMPEN-LICHTVERTEILUNGSSYSTEM**

(30) Priorität: 15.08.2019 CN 201921327431 U; 17.01.2020 CN 202020111362 U
(71) Anmelder: Jiashan Shengguang Electronics Co., Ltd., Jiashan City, Zhejiang (CN)
(72) Erfinder: BIN, Jiang, Jiaxing City Zhejiang Province 314113 (CN)
(74) Vertreter: Paul & Albrecht Patentanwälte PartG mbB

(57) **Zusammenfassung**

Die vorliegende Anmeldung betrifft ein Fahrradlampen-Lichtverteilungssystem (10) umfassend eine LED-Lichtquelle (11), die eine optische Achse (111) aufweist, und eine im Strahlengang der LED-Lichtquelle (11) angeordnete Linsengruppe (12) mit einer Sammellinse (121) und einer in Lichtaustrittsrichtung der Sammellinse (121) angeordnete speziell geformte Linse (122), wobei eine erste Lichtaustrittsfläche (124) der Sammellinse (121) eine zweite Lichtaustrittsfläche (126) das von der LED-Lichtquelle (11) ausgestrahlte Licht so einstellen, dass es sich um ein parallel zu der optischen Achse (111) verlaufendes gerichtetes Licht handelt, und wobei die erste Lichtaustrittsfläche (124) der Sammellinse (121) und die zweite Lichtaustrittsfläche (126) der speziell geformten Linse (122) das von der LED-Lichtquelle (11) ausgestrahlte Licht so einstellen, dass es sich um ein von der optischen Achse (111) entferntes diffuses Licht handelt sowie eine Fahrradlampe (1).

## Beschreibung

Die vorliegende Erfindung betrifft das technische Gebiet der Lampen und der Lichtverteilung. Insbesondere betrifft die vorliegende Erfindung ein Fahrradlampen-Lichtverteilungssystem und eine Fahrradlampe.

Beim Fahrrad handelt es sich im Alltag der Menschen um ein unabdingbares Verkehrsmittel, das für den Weg zur oder von der Arbeit oder für Ausflüge auf dem Land genutzt wird. Mit dem Appell an die Gesellschaft, Energie zu sparen, und dem Wert, den die Menschen auf die Gesundheit legen, haben außerdem viele Menschen das Fahrradfahren wieder neu für sich entdeckt. Heutzutage gibt es auch sehr viele Arten von Fahrrädern, wie Mountainbikes, Geländeräder etc., wobei jedes seine ganz eigenen Funktionen hat. Aber bei der Nutzung des Fahrrads, insbesondere beim Fahren am Abend, stellt man häufig fest, dass es zu dunkel ist, um Fahrrad zu fahren. Auch wenn es Stra-ßenbeleuchtung gibt, ist es dennoch schwer zu gewährleisten, dass man den Weg vor sich klar erkennen kann. Manche greifen zu einer Taschenlampe, um den Weg zu beleuchten, aber mit der Taschenlampe in einer Hand ist das Fahrradfahren nicht sicher, weshalb man die Fahrräder heute alle mit einer am Fahrradrahmen angebrachten radeigenen Lampe ausstatten kann. Folglich gehört die Fahrradlampe nunmehr zur Grundausstattung eines Fahrrads, so dass beim Fahren in der Dunkelheit oder bei sehr schlechtem Wetter die Fahrradlampe eingeschaltet werden kann, um sich einerseits selbst den Weg zu leuchten und um andererseits dafür zu sorgen, dass man von anderen Fahrzeugen gesehen wird.

Einige Länder haben im Zuge der technologischen Entwicklung und der Erhöhung des Lebensstandards konkrete Anforderungen an den Lichtfleck der radeigenen Lampen von Fahrrädern gestellt. Einfach nur eine Beleuchtung zu haben, reicht nicht aus.

Vor diesem Hintergrund ist es eine erste Aufgabe der vorliegenden Erfindung, ein Fahrradlampen-Lichtverteilungssystem und eine Fahrradlampe zu schaffen, mit deren Hilfe ein bestimmter Lichtfleck herausgebildet werden kann, der die konkreten Anforderungen erfüllt.

Bei Fahrzeuglampen wird ferner zwischen Fernlichtlampen und Abblendlichtlampen unterschieden, und es kann zwischen Fernlicht und Abblendlicht umgeschaltet werden. Die Abblendlichtlampe beleuchtet kurze Entfernungen und dient dazu, dem Fahrzeug auf kurze Entfernung den Weg auszuleuchten. In der Regel kann bei relativ guter Straßenbeleuchtung und geringer Fahrzeuggeschwindigkeit Abblendlicht verwendet werden. Der Lichtstrahl der Fernlichtlampe ist gebündelt, von relativ großer Helligkeit, beleuchtet weite Entfernungen und dient dazu, dem Fahrzeug auf weite Entfernung den Weg auszuleuchten. In der Regel wird, wenn es keine andere Beleuchtung gibt, sowie bei relativ hoher Fahrzeuggeschwindigkeit Fernlicht verwendet.

Vor diesem Hintergrund ist es eine zweite Aufgabe der vorliegenden Erfindung, bei gleichzeitiger Erfüllung der Anforderungen einiger Länder an den Lichtfleck der Fahrradlampen Fern- und Abblendlicht zu realisieren.

Zur Lösung der ersten Aufgabe schafft die vorliegende Erfindung ein Fahrradlampen-Lichtverteilungssystem umfassend eine LED-Lichtquelle, die eine optische Achse aufweist, und eine im Strahlengang der LED-Lichtquelle angeordnete Linsengruppe mit einer Sammellinse und einer in Lichtaustrittsrichtung der Sammellinse angeordnete speziell geformte Linse. Die Sammellinse umfasst eine erste Lichteintrittsfläche und eine erste Lichtaustrittsfläche. Die speziell geformte Linse umfasst eine zweite Lichteintrittsfläche und eine zweite Lichtaustrittsfläche. Die Umrisslinie der zweiten Lichteintrittsfläche auf einer der Querschnittsflächen entlang der optischen Achse umfasst einen geradlinigen Abschnitt sowie einen mit diesem geradlinigen Abschnitt verbundenen bogenförmigen Abschnitt. Die erste Lichtaustrittsfläche und die dem geradlinigen Abschnitt entsprechende zweite Lichtaustrittsfläche stellen das von der LED-Lichtquelle ausgestrahlte Licht so ein, dass es sich um ein parallel zu der optischen Achse verlaufendes gerichtetes Licht handelt, und die erste Lichtaustrittsfläche und die dem bogenförmigen Abschnitt entsprechende zweite Lichtaustrittsfläche stellen das von der LED-Lichtquelle ausgestrahlte Licht so ein, dass es sich um ein von der optischen Achse entferntes diffuses Licht handelt.

Mit diesem Fahrradlampen-Lichtverteilungssystem kann erreicht werden, dass das von der dem geradlinigen Abschnitt entsprechenden zweiten Lichtaustrittsfläche ausgestrahlte gerichtete Licht auf dem Boden einen hellen Lichtfleck bildet, und das von der dem bogenförmigen Abschnitt entsprechenden zweiten Lichtaustrittsfläche ausgestrahlte diffuse Licht auf dem Boden ein Lichtband bildet, so dass die Anforderungen einer Reihe von Ländern an die Lichtfleckstruktur erfüllt werden können.

Gemäß einer Ausgestaltung der vorliegenden Erfindung handelt es sich bei der ersten Lichtaustrittsfläche um eine Rotationsfläche mit der optischen Achse als Mittelachse. Bei der Umrisslinie der ersten Lichtaustrittsfläche auf der Querschnittsfläche entlang der optischen Achse handelt es sich um einen bezogen auf die LED-Lichtquelle linksgekrümmten Bogen. Die zweite Lichteintrittsfläche der speziell geformten Linse wird durch Scannen des geradlinigen Abschnitts und bogenförmigen Abschnitts entlang den zur Anordnungsrichtung des geradlinigen Abschnitts und bogenförmigen Abschnitts sowie den zur von der optischen Achse gebildeten Ebene vertikal angeordneten vertikalen Linien gebildet. Bei der Umrisslinie der zweiten Lichtaustrittsfläche auf der entlang der optischen Achse und in parallel zur Anordnungsrichtung des geradlinigen Abschnitts und bogenförmigen Abschnitts befindlichen Querschnittsfläche handelt es sich um eine bogenförmige Linie. Die zweite Lichtaustrittsfläche wird durch Scannen der bogenförmigen Linie entlang den zur Anordnungsrichtung des geradlinigen Abschnitts und bogenförmigen Abschnitts sowie den zur von der optischen Achse gebildeten Ebene vertikal angeordneten vertikalen Linien gebildet. Die erste Lichtaustrittsfläche und die dem geradlinigen Abschnitt entsprechende zweite Lichtaustrittsfläche stellen in Richtung der optischen Achse das von der LED-Lichtquelle ausgestrahlte Licht so ein, dass es sich um ein parallel zu der optischen Achse verlaufendes gerichtetes Licht handelt, und die erste Lichtaustrittsfläche und die dem bogenförmigen Abschnitt entsprechende zweite Lichtaustrittsfläche stellen das von der LED-Lichtquelle ausgestrahlte Licht so ein, dass es sich um ein von der optischen Achse entferntes diffuses Licht handelt.

Bevorzugt überschneiden sich die optische Achse und der geradlinige Abschnitt und stehen vertikal zueinander.

Vorteilhaft sind die LED-Lichtquelle und die Sammellinse mit einem Abstand angebracht, sind die Sammellinse und die speziell geformte Linse mit einem Abstand angebracht und ist die Sammellinse zwischen der LED-Lichtquelle und der speziell geformten Linse angebracht.

Bevorzugt wird, wenn der geradlinige Abschnitt und bogenförmige Abschnitt entlang den zur Anordnungsrichtung des geradlinigen Abschnitts und bogenförmigen Abschnitts sowie den zur von der optischen Achse gebildeten Ebene vertikal angeordneten vertikalen Linien gescannt werden, eine Grenzlinie herausgebildet, wobei die Grenzlinie bei der Verwendung parallel zur horizontalen Ebene ist.

Gemäß einer Ausgestaltung der vorliegenden Erfindung befindet sich bei der Verwendung die durch Scannen des bogenförmigen Abschnitts entstehende zweite Lichteintrittsfläche unterhalb der durch Scannen des geradlinigen Abschnitts entstehenden zweiten Lichteintrittsfläche.

Bevorzugt dient auf der entlang der optischen Achse und in Anordnungsrichtung des geradlinigen Abschnitts und bogenförmigen Abschnitts befindlichen Querschnittsfläche die optische Achse der bogenförmigen Linie als Symmetrieachse.
Ferner verläuft die optische Achse in Lichtaustrittsrichtung der Sammellinse durch die Mittelachse der Sammellinse.

Vorteilhaft handelt es sich bei der ersten Lichteintrittsfläche um eine Ebene.

Zur Lösung der zweiten Aufgabe ist eine Lichtquellengruppe vorgesehen, in deren Strahlengang die Linsengruppe angeordnet ist, wobei die Lichtquellengruppe die LED-Lichtquelle als Abblendlichtquelle und eine weitere LED-Lichtquelle als Fernlichtquelle aufweist. Die optische Achse des Abblendlichts der Abblendlichtquelle stimmt dabei bevorzugt mit der optischen Achse der Linsengruppe überein. Die Abblendlichtquelle ist in vertikal zur horizontalen Ebene verlaufender Richtung oberhalb von der Fernlichtquelle angebracht. Ferner ist ein Ein-Tasten-Schalter zum Wechseln zwischen Abblend- und Fernlicht vorgesehen. Wenn nur die Abblendlichtquelle eingeschaltet wird, stellen die erste Lichtaustrittsfläche und die dem geradlinigen Abschnitt entsprechende zweite Lichtaustrittsfläche das von der LED-Lichtquellengruppe ausgestrahlte Licht entlang der optischen Achse des Abblendlichts so ein, dass es sich um ein parallel zu der optischen Achse des Abblendlichts verlaufendes gerichtetes Licht handelt, und die erste Lichtaustrittsfläche und die dem bogenförmigen Abschnitt entsprechende zweite Lichtaustrittsfläche stellen das von der Abblendlichtquelle ausgestrahlte Licht so ein, dass es sich um ein von der optischen Achse entferntes diffuses Licht handelt, wobei, wenn nur die Fernlichtquelle eingeschaltet wird, die Sammellinse und die speziell geformte Linse beide das von der Fernlichtquelle ausgestrahlte Licht streuen und in die Ferne strahlen.

Verglichen mit dem aktuellen Stand der Technik verfügt das erfindungsgemäße Fahrradlampen-Lichtverteilungssystem mit Ein-Tasten-Schalter zum Wechseln zwischen Abblend- und Fernlicht über eine Fernlichtquelle und eine Abblendlichtquelle sowie über eine der Einstellung der LED-Lichtquellengruppe dienende Linsengruppe. Wird die Abblendlichtquelle eingeschaltet, wird das von dieser Abblendlichtquelle ausgestrahlte Licht zunächst von der Sammellinse gebündelt, wobei die speziell geformte Linse in Lichtaustrittsrichtung der Sammellinse angebracht ist, die erste Lichteintrittsfläche der n speziell geformten Linse in zwei Teile unterteilt ist, diese beiden Teile auf der Querschnittsfläche entlang der optischen Achse des Abblendlichts durch Scannen des geradlinigen Abschnitts und Scannen des bogenförmigen Abschnitts entstehen, gleichzeitig die zweite Lichtaustrittsfläche der speziell geformten Linse durch Scannen einer bogenförmigen Linie entsteht, und die dem geradlinigen Abschnitt entsprechende zweite Lichtaustrittsfläche zusammen mit der ersten Lichtaustrittsfläche der Sammellinse das von der Abblendlichtquelle ausgestrahlte Licht so einstellt, dass es sich um ein gerichtetes Licht handelt. Und die dem bogenförmigen Abschnitt entsprechende zweite Lichtaustrittsfläche stellt zusammen mit der ersten Lichtaustrittsfläche der Sammellinse das von der Abblendlichtquelle ausgestrahlte Licht so ein, dass es entfernt von der optischen Achse des Abblendlichts gestreut wird, wodurch erreicht wird, dass das von der dem geradlinigen Abschnitt entsprechenden zweiten Lichtaustrittsfläche ausgestrahlte gerichtete Licht auf dem Boden einen hellen Lichtfleck bildet, und das von der dem bogenförmigen Abschnitt entsprechenden zweiten Lichtaustrittsfläche ausgestrahlte diffuse Licht auf dem Boden ein Lichtband bildet, so dass die Anforderungen einer Reihe von Ländern an die Lichtfleckstruktur erfüllt werden können. Und wenn die Fernlichtquelle eingeschaltet wird, wird dadurch, dass die Abblendlichtquelle in vertikal zur horizontalen Ebene verlaufender Richtung oberhalb von der Fernlichtquelle angebracht ist, erreicht, dass das von der Fernlichtquelle ausgestrahlte Licht von der Sammellinse nicht vollständig gerichtet wird, und dann das von dieser Fernlichtquelle ausgestrahlte Licht noch einmal durch den bogenförmigen Abschnitt der speziell geformten Linse in die Ferne ausgestrahlt wird, so dass eine Fernlichtlampe entsteht, wodurch diese Fahrradlampe dann sowohl die Vorschriften einer Reihe von Ländern zum Lichtfleck erfüllen als auch die Form eines Fernlichtflecks und eines Abblendlichtflecks realisieren kann.

Bevorzugt umfasst die Fernlichtquelle einen LED-Chip oder mehrere LED-Chips.

Gemäß einer Ausgestaltung der vorliegenden Erfindung umfasst die Fernlichtquelle mehrere LED-Chips, wobei die Anordnungsrichtung dieser mehreren LED-Chips parallel zur horizontalen Ebene ist.

Vorteilhaft umfasst das Fahrradlampen-Lichtverteilungssystem einen Lichtumschalter, wobei der Lichtumschalter dazu dient, die Fernlichtquelle oder die Abblendlichtquelle einzuschalten beziehungsweise die Fernlichtquelle und die Abblendlichtquelle auszuschalten.

Ferner schafft die vorliegende Erfindung eine Fahrradlampe, umfassend ein wie vorangehend Fahrradlampen-Lichtverteilungssystem sowie ein dem Einbau des Fahrradlampen-Lichtverteilungssystems dienendes Lampengehäuse. Das Lampengehäuse umfasst ein Außengehäuse sowie ein in dem Au-ßengehäuse angebrachtes Innengehäuse. Die speziell geformte Linse ist an dem Außengehäuse angebracht. Die Lichtquelle und die Sammellinse sind an dem Innengehäuse angebracht. Ferner ist auf der in Anordnungsrichtung des geradlinigen Abschnitts und bogenförmigen Abschnitts und entlang der optischen Achse befindlichen Querschnittsfläche die durch Scannen des bogenförmigen Abschnitts entstehende erste Lichteintrittsfläche dem Boden zugewandt angebracht.

Verglichen mit dem aktuellen Stand der Technik ist es bei dem von dieser Erfindung offenbarten Fahrradlampen-Lichtverteilungssystem so, dass wenn die Fahrradlampe eingeschaltet ist, das von der LED-Lichtquelle ausgestrahlte Licht zunächst von der Sammellinse gebündelt wird, wobei die speziell geformte Linse in Lichtaustrittsrichtung der Sammellinse angebracht ist, die Lichteintrittsfläche der speziell geformten Linse in zwei Teile unterteilt ist, diese beiden Teile auf der Querschnittsfläche entlang der optischen Achse durch Scannen des geradlinigen Abschnitts und Scannen des bogenförmigen Abschnitts entstehen, gleichzeitig die zweite Lichtaustrittsfläche der speziell geformten Linse durch Scannen einer bogenförmigen Linie entsteht, und die dem geradlinigen Abschnitt entsprechende zweite Lichtaustrittsfläche zusammen mit der ersten Lichtaustrittsfläche der Sammellinse das von der LED-Lichtquelle ausgestrahlte Licht so einstellt, dass es sich um ein gerichtetes Licht handelt. Und die dem bogenförmigen Abschnitt entsprechende zweite Lichtaustrittsfläche stellt zusammen mit der ersten Lichtaustrittsfläche der Sammellinse das von der LED-Lichtquelle ausgestrahlte Licht so ein, dass es entfernt von der optischen Achse gestreut wird, wodurch erreicht wird, dass das von der dem geradlinigen Abschnitt entsprechenden zweiten Lichtaustrittsfläche ausgestrahlte gerichtete Licht auf dem Boden einen hellen Lichtfleck bildet, und das von der dem bogenförmigen Abschnitt entsprechenden zweiten Lichtaustrittsfläche ausgestrahlte diffuse Licht auf dem Boden ein Lichtband bildet, so dass die Anforderungen einer Reihe von Ländern an die Lichtfleckstruktur erfüllt werden können.

Weitere Merkmale und Vorteile der Erfindung werden anhand der nachfolgenden Beschreibung von Ausführungsformen der Erfindung unter Bezugnahme auf die beiliegende Zeichnung deutlich. Darin ist
Figur 1 eine schematischer Darstellung des strukturellen Aufbaus einer Fahrradlampe gemäß einer Ausführungsform der vorliegenden Erfindung;
Figur 2 eine schematische Darstellung einer Querschnittsstruktur der in Figur 1 gezeigten Fahrradlampe;
Figur 3 eine schematische Darstellung des Strahlengangs der in Figur 1 gezeigten Fahrradlampe;
Figur 4 eine schematische Darstellung des strukturellen Aufbaus einer Fahrradlampe gemäß einer zweiten Ausführungsform der vorliegenden Erfindung; und
Figur 5 eine schematische Darstellung einer Querschnittsstruktur der in Figur 4 gezeigten Fahrradlampe..

Nachfolgend werden zwei Ausführungsformen der vorliegenden Erfindung näher im Detail erläutert. Es ist darauf hinzuweisen, dass mit der hier erfolgenden Erläuterung der Ausführungsformen keinesfalls eine Einschränkung des durch die beiliegenden Ansprüche definierten Schutzbereiches erfolgen soll.

Gleiche Bezugsziffern beziehen sich nachfolgend auf gleiche oder auf gleichartig ausgebildete Bauteile oder Bauteilbereiche.

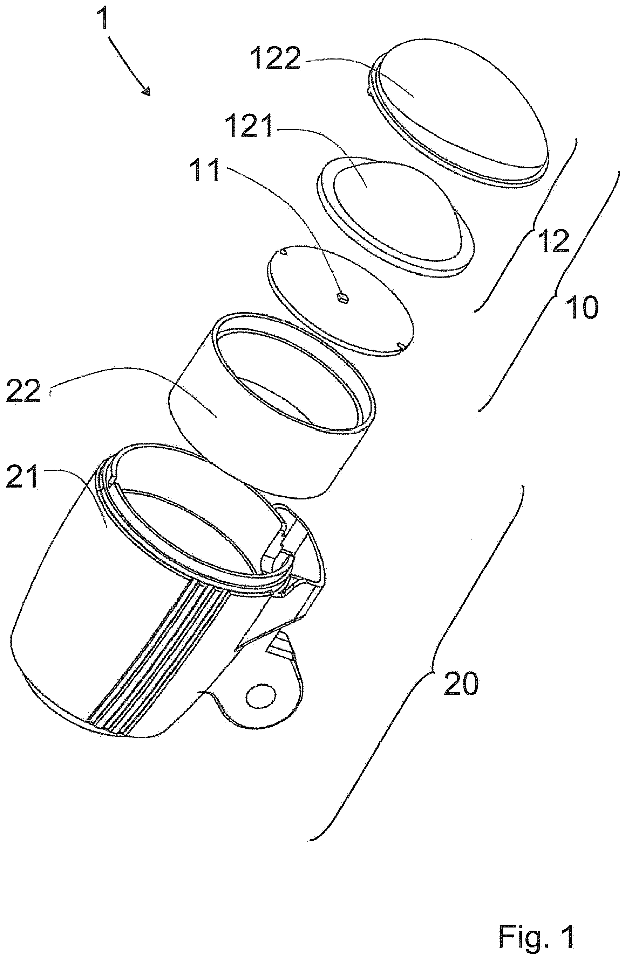

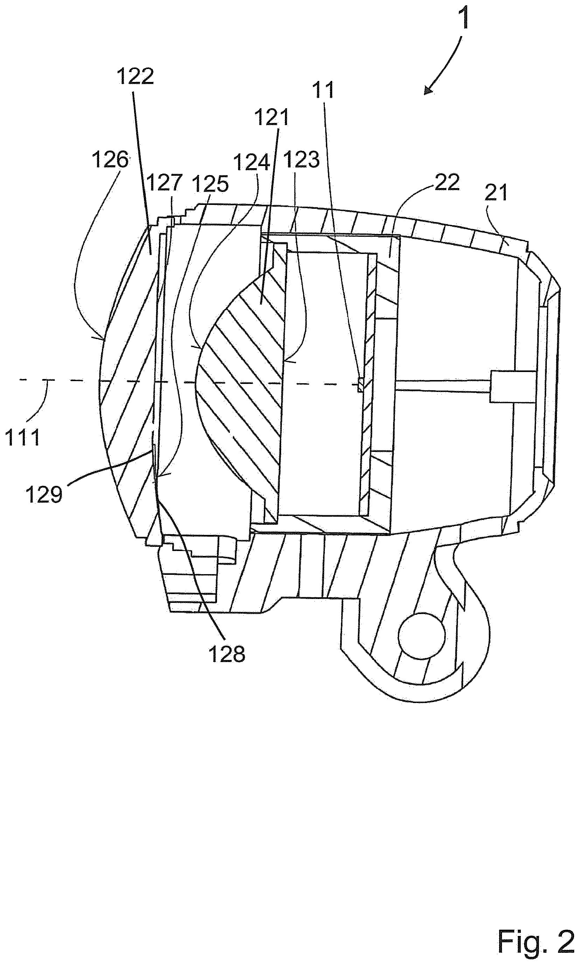

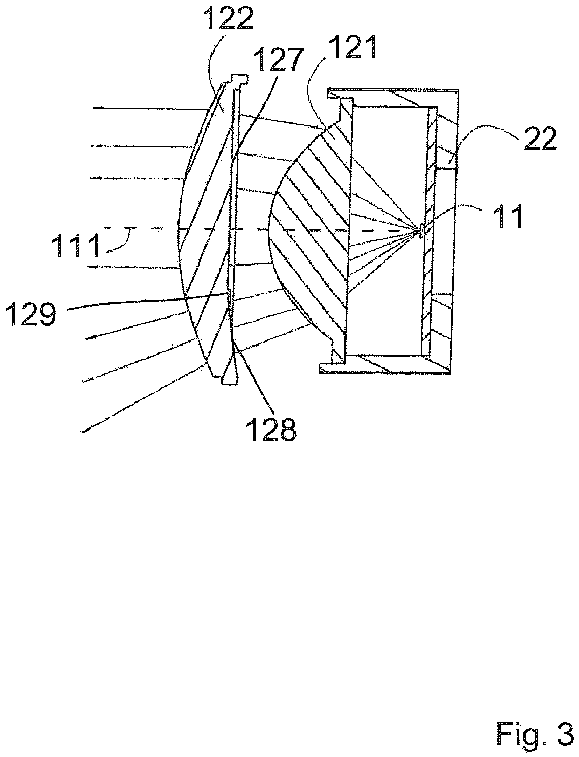

Die Figuren 1 bis 3 zeigen schematisch eine erste Ausführungsform einer erfindungsgemäßen Fahrradlampe 1. Die Fahrradlampe 1 umfasst ein Fahrradlampen-Lichtverteilungssystem 10 sowie ein dem Einbau des Fahrradlampen-Lichtverteilungssystems 10 dienendes Lampengehäuse 20. Es versteht sich, dass die Fahrradlampe noch andere Funktionsmodule umfasst, wie zum Beispiel ein Netzteilmodul, Komponenten für die elektrische Verbindung, Zusammenbaukomponenten etc., bei denen es sich um einem technischen Fachmann auf diesem Gebiet bekannte Techniken handelt, so dass diese hier nicht noch einmal erläutert werden.

Das Fahrradlampen-Lichtverteilungssystem 10 umfasst eine LED-Lichtquelle 11 sowie eine in Lichtaustrittsrichtung der LED-Lichtquelle 11 angebrachte Linsengruppe 12. Bei der LED-Lichtquelle 11 handelt es sich um eine LED-Lampenperle. Bei der LED-Lampenperle handelt es sich um eine einem technischen Fachmann auf diesem Gebiet bekannte Technik, die auch als Leuchtdiode bezeichnet wird und die in einer Halbleiter-Elektronikkomponente, die elektrische Energie in Lichtenergie umwandelt, besteht. Dem technischen Fachmann auf diesem Gebiet ist bereits bekannt, dass jede Lichtquelle eine optische Achse umfasst, wobei die optische Achse dem optischen Design als Orientierung und Bezugsbasis dient. In diesem Ausführungsbeispiel verfügt die LED-Lichtquelle 11 über eine optische Achse 111.

Die Linsengruppe 12 umfasst eine Sammellinse 121 sowie eine in Lichtaustrittsrichtung der Sammellinse 121 angebrachte speziell geformte Linse 122. Beim Einbauen der LED-Lichtquelle 11 und der Linsengruppe 12 ist dafür zu sorgen, dass die LED-Lichtquelle 11 und die Sammellinse 121 mit einem Abstand angebracht werden, dass die Sammellinse 121 und die speziell geformte Linse 122 mit einem Abstand angebracht werden und dass die Sammellinse 121 zwischen der LED-Lichtquelle 111 und der speziell geformten Linse 122 angebracht wird. Die Sammellinse 121 umfasst eine der Aufnahme des von der LED-Lichtquelle 11 kommenden Lichts dienende erste Lichteintrittsfläche 123 sowie eine der Aufnahme des von der ersten Lichteintrittsfläche 123 kommenden Lichts dienende erste Lichtaustrittsfläche 124. Bei der ersten Lichteintrittsfläche 123 handelt es sich um eine Ebene. Handelt es sich bei einer Lichteintrittsfläche um eine Ebene, nimmt diese, abgesehen von der eigenen Veränderung des Lichtwegs entsprechend dem Brechungsgesetz, keine Einstellung des Lichtwegs des austretenden Lichts vor. Bei der ersten Lichtaustrittsfläche 124 handelt es sich um eine Rotationsfläche mit der optischen Achse 111 als Mittelachse. Folglich verläuft die optische Achse 111 in Lichtaustrittsrichtung der Sammellinse 121 durch die Mittelachse der Sammellinse 121. Bei der Umrisslinie der ersten Lichtaustrittsfläche 124 auf der Querschnittsfläche entlang der optischen Achse 111 handelt es sich um einen bezogen auf die LED-Lichtquelle 11 linksgekrümmten, also konvexen Bogen. Die erste Lichtaustrittsfläche 124 nimmt eine erste Einstellung des von der LED-Lichtquelle 11 ausgestrahlten Lichts vor, und da es sich bei der Umrisslinie der ersten Lichtaustrittsfläche 124 um einen bezogen auf die LED-Lichtquelle 11 linksgekrümmten Bogen handelt, bündelt sie das von der LED-Lichtquelle 11 ausgestrahlte Licht. Für die Vornahme der Einstellung des Bündelungsgrads bedarf es der Mitwirkung der speziell geformten Linse 122, auf die im Folgenden näher eingegangen wird.

Die speziell geformte Linse 122 umfasst eine der Aufnahme des von der ersten Lichtaustrittsfläche 124 ausgestrahlten Lichts dienende zweite Lichteintrittsfläche 125 sowie eine der Aufnahme des von der zweiten Lichteintrittsfläche 125 ausgestrahlten Lichts dienende zweite Lichtaustrittsfläche 126. Die Umrisslinie der zweiten Lichteintrittsfläche 125 auf einer der Querschnittsflächen entlang der optischen Achse 111 umfasst einen geradlinigen Abschnitt 127 sowie einen mit dem geradlinigen Abschnitt 127 verbundenen bogenförmigen Abschnitt 128. Die zweite Lichteintrittsfläche 125 wird durch Scannen des geradlinigen Abschnitts 127 und bogenförmigen Abschnitts 128 entlang den zur Anordnungsrichtung des geradlinigen Abschnitts 127 und bogenförmigen Abschnitts 128 sowie den zur von der optischen Achse 111 gebildeten Ebene vertikal angeordneten vertikalen Linien gebildet. Daraus folgt auch, dass wenn der geradlinige Abschnitt 127 und bogenförmige Abschnitt 128 entlang den zur Anordnungsrichtung des geradlinigen Abschnitts 127 und bogenförmigen Abschnitts 128 sowie den zur von der optischen Achse 111 gebildeten Ebene vertikal angeordneten vertikalen Linien gescannt werden, eine Grenzlinie 129 herausgebildet wird, wobei die Grenzlinie 129 bei der Verwendung parallel zur horizontalen Ebene ist. Es handelt sich bei der Umrisslinie der zweiten Lichtaustrittsfläche 126 auf der entlang der optischen Achse 111 und in parallel zur Anordnungsrichtung des geradlinigen Abschnitts 127 und bogenförmigen Abschnitts 128 befindlichen Querschnittsfläche um eine bogenförmige Linie. Die zweite Lichteintrittsfläche 126 wird durch Scannen der bogenförmigen Linie entlang den zur Anordnungsrichtung des geradlinigen Abschnitts 127 und bogenförmigen Abschnitts 128 sowie den zur von der optischen Achse 111 gebildeten Ebene vertikal angeordneten vertikalen Linien gebildet. Außerdem dient auf der entlang der optischen Achse 111 und in Anordnungsrichtung des geradlinigen Abschnitts 127 und bogenförmigen Abschnitts 128 befindlichen Querschnittsfläche die optische Achse 111 der bogenförmigen Linie als Symmetrieachse, wodurch das Einstellen der Menge an austretendem Licht der verschiedenen gebildeten Lichtflecke durch die zweite Lichteintrittsfläche 125 begünstigt wird. Die Form der zweiten Lichtaustrittsfläche 126 wird konkret durch die nachfolgenden Anforderungen festgelegt, nämlich stellen die erste Lichtaustrittsfläche 123 und die dem geradlinigen Abschnitt 127 entsprechende zweite Lichtaustrittsfläche 126 das von der LED-Lichtquelle 11 ausgestrahlte Licht entlang der optischen Achse 111 so ein, dass es sich um ein parallel zu der optischen Achse 111 verlaufendes gerichtetes Licht handelt, die erste Lichtaustrittsfläche 123 und die dem bogenförmigen Abschnitt 128 entsprechende zweite Lichtaustrittsfläche 123 stellen das von der LED-Lichtquelle 11 ausgestrahlte Licht so ein, dass es sich um ein von der optischen Achse 11 entferntes diffuses Licht handelt. Um die Menge des aus der dem geradlinigen Abschnitt 127 entsprechenden zweiten Lichtaustrittsfläche 126 austretenden Lichts einzustellen, überschneiden sich die optischen 111 und der geradlinige Abschnitt 127 und stehen vertikal zueinander. Das Lampengehäuse 20 umfasst ein Außengehäuse 21 sowie ein in dem Außengehäuse 21 angebrachtes Innengehäuse 22. Die konkrete Form des Außengehäuses 21 ist gemäß dem tatsächlichen Bedarf festzulegen, häufig ist sie zylinderförmig, in diesem Ausführungsbeispiel weist das Außengehäuse 21 als Querschnittsfläche die Form eines elliptischen Zylinders auf. Die speziell geformte Linse 122 ist fest an dem Außengehäuse 21 befestigt, wozu es mehrere Befestigungsverfahren gibt, wie Schraubverbindung, Verwendung von Befestigungselementen oder Verklebung. In diesem Ausführungsbeispiel ist an dem Außengehäuse 21 und an der speziell geformten Linse 122 jeweils eine Stufe angebracht, die miteinander gekoppelt sind und dann sind dieses Außengehäuse 21 und die speziell geformten Linse 122 mithilfe von Klebstoff befestigt. Das Innengehäuse 22 dient dem Einbau der LED-Lichtquelle 121 und der Sammellinse 121. Folglich weist das Innengehäuse 21 eine Kreiszylinderstruktur auf, dessen eine Seite dem Einbau der LED-Lichtquelle 11 dient und dessen andere Seite dem Einbau der Sammellinse 121 dient, wobei die konkrete Einbauweise dem aktuellen Stand der Technik entspricht, so dass auf diese hier nicht noch einmal eingegangen wird.

Bei der Verwendung befindet sich die durch Scannen des bogenförmigen Abschnitts 128 entstehende zweite Lichteintrittsfläche 125 unterhalb der durch Scannen des geradlinigen Abschnitts 127 entstehenden zweiten Lichteintrittsfläche 125. Folglich ist auf der in Anordnungsrichtung des geradlinigen Abschnitts 127 und bogenförmigen Abschnitts 128 und entlang der optischen Achse 111 befindlichen Querschnittsfläche die durch Scannen des bogenförmigen Abschnitts 128 entstehende erste Lichteintrittsfläche 125 dem Boden zugewandt angebracht.

Verglichen mit dem aktuellen Stand der Technik ist es bei dem von dieser Erfindung offenbarten Fahrradlampen-Lichtverteilungssystem so, dass, wenn die Fahrradlampe eingeschaltet ist, das von der LED-Lichtquelle 11 ausgestrahlte Licht zunächst von der Sammellinse 121 gebündelt wird, wobei die speziell geformte Linse 122 in Lichtaustrittsrichtung der Sammellinse 121 angebracht ist, die zweite Lichteintrittsfläche 125 der speziell geformten Linse 121 in zwei Teile unterteilt ist, diese beiden Teile auf der Querschnittsfläche entlang der optischen Achse 111 durch Scannen des geradlinigen Abschnitts 127 und Scannen des bogenförmigen Abschnitts 128 entstehen, gleichzeitig die zweite Lichtaustrittsfläche 126 der speziell geformten Linse 122 durch Scannen einer bogenförmigen Linie entsteht, und die dem geradlinigen Abschnitt 127 entsprechende zweite Lichtaustrittsfläche 126 zusammen mit der ersten Lichtaustrittsfläche 124 der Sammellinse 121 das von der LED-Lichtquelle 11 ausgestrahlte Licht so einstellt, dass es sich um ein gerichtetes Licht handelt. Und die dem bogenförmigen Abschnitt 128 entsprechende zweite Lichtaustrittsfläche 126 stellt zusammen mit der ersten Lichtaustrittsfläche 124 der Sammellinse 121 das von der LED-Lichtquelle 111 ausgestrahlte Licht so ein, dass es entfernt von der optischen Achse 111 gestreut wird, wodurch erreicht wird, dass das von der dem geradlinigen Abschnitt 127 entsprechenden zweiten Lichtaustrittsfläche 126 ausgestrahlte gerichtete Licht auf dem Boden einen hellen Lichtfleck bildet, und das von der dem bogenförmigen Abschnitt 128 entsprechenden zweiten Lichtaustrittsfläche 126 ausgestrahlte diffuse Licht auf dem Boden ein Lichtband bildet, so dass die Anforderungen einer Reihe von Ländern an die Lichtfleckstruktur erfüllt werden können.

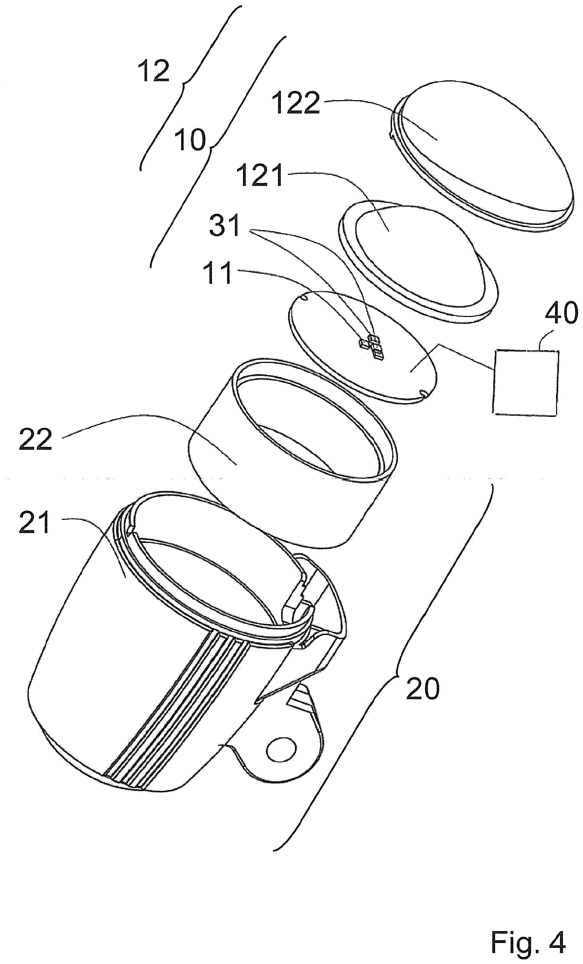

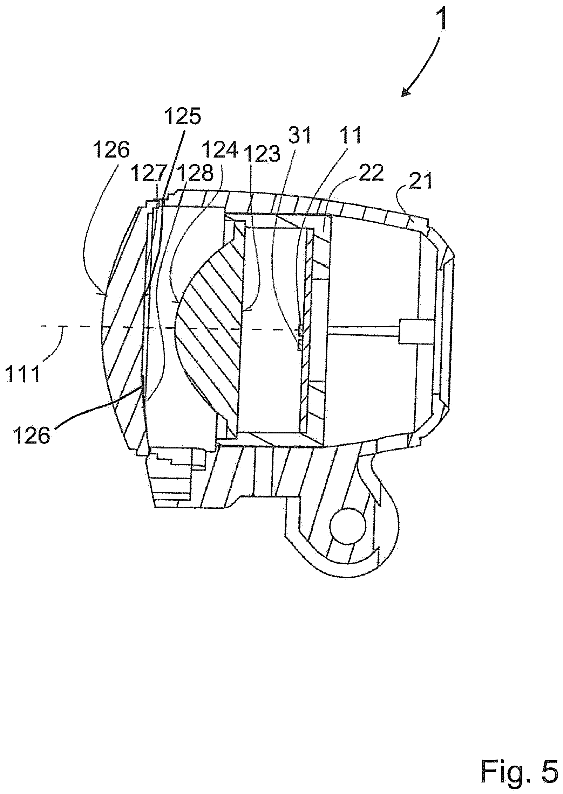

Die Figuren 4 und 5 zeigen schematisch eine zweite Ausführungsform einer erfindungsgemäßen Fahrradlampe 1 mit Ein-Tasten-Schalter zum Wechseln zwischen Abblend- und Fernlicht. Die Fahrradlampe 1 umfasst ein Lampengehäuse 20, eine fest in dem Lampengehäuse 20 angebrachte LED-Lichtquellengruppe 30, eine in Lichtaustrittsrichtung der LED-Lichtquellengruppe 30 angebrachte Linsengruppe 12 sowie einen der Steuerung des Betriebszustands der LED-Lichtquellengruppe 30 dienenden Lichtumschalter 40. Es versteht sich, dass die Fahrradlampe noch andere Funktionsmodule umfasst, wie zum Beispiel ein Netzteilmodul, Komponenten für die elektrische Verbindung, Zusammenbaukomponenten etc., bei denen es sich um einem technischen Fachmann auf diesem Gebiet bekannte Techniken handelt, so dass diese hier nicht noch einmal erläutert werden.

Das Lampengehäuse 20 umfasst ein Außengehäuse 21 sowie ein in dem Außengehäuse 21 angebrachtes Innengehäuse 22. Die konkrete Form des Außengehäuses 21 ist gemäß dem tatsächlichen Bedarf festzulegen. Häufig ist sie zylinderförmig, vorliegend weist das Außengehäuse 21 als Querschnittsfläche die Form eines elliptischen Zylinders auf. Die Linsengruppe 12 ist fest an dem Außengehäuse 21 befestigt, wozu es mehrere Befestigungsverfahren gibt, wie Schraubverbindung, Verwendung von Befestigungselementen oder Verklebung. Das Innengehäuse 22 dient dem Einbau der LED-Lichtquellengruppe 30. Der konkrete Aufbau des Lampengehäuses 20 entspricht dem aktuellen Stand der Technik, so dass auf diesen hier nicht noch einmal eingegangen wird.

Die LED-Lichtquellengruppe 30 umfasst eine LED-Lichtquelle 11 als Abblendlichtquelle, die nachfolgend als Abblendlichtquelle 11 bezeichnet wird, und eine Fernlichtquelle 31. Bei der Abblendlichtquelle 11 und der Fernlichtquelle 31 handelt es sich jeweils um LED-Chips. Bei den LED-Chips handelt es sich um eine einem technischen Fachmann auf diesem Gebiet bekannte Technik, die auch als Leuchtdiode bezeichnet wird und die in einer Halbleiter-Elektronikkomponente, die elektrische Energie in Lichtenergie umwandelt, besteht. Dem technischen Fachmann auf diesem Gebiet ist bereits bekannt, dass jede Lichtquelle eine optische Achse umfasst, wobei die optische Achse dem optischen Design als Orientierung und Bezugsbasis dient. In diesem Ausführungsbeispiel verfügt die Abblendlichtquelle 11 über eine optische Achse des Abblendlichts 111. Natürlich versteht es sich, dass die Fernlichtquelle 31 auch über eine optische Achse des Fernlichts verfügt, die dem optischen Design jedoch nicht als Orientierung und Bezugsbasis dient und somit an dieser Stelle nicht dargestellt und erläutert wird. Die Abblendlichtquelle 11 ist in vertikal zur horizontalen Ebene verlaufender Richtung oberhalb von der Fernlichtquelle 31 angebracht. Die Fernlichtquelle 31 kann einen LED-Chip oder mehrere LED-Chips umfassen. Da die Fernlichtquelle 31 weitere Entfernungen beleuchten muss, verfügt die Fernlichtquelle 31 über mehrere LED-Chips. Die Anordnungsrichtung dieser mehreren LED-Chips ist parallel zur horizontalen Ebene. Natürlich versteht es sich, dass die Abblendlichtquelle 11 auch über mehrere LED-Chips verfügen kann, wobei die Anordnungsrichtung dieser mehreren LED-Chips auch parallel zur horizontalen Ebene ist, um das Konzipieren der Lichtaustrittsrichtung und des entstehenden Lichtflecks zu begünstigen.

Die Linsengruppe 12 umfasst eine Sammellinse 121 sowie eine in Lichtaustrittsrichtung der Sammellinse 121 angebrachte speziell geformte Linse 122. Beim Einbauen der LED-Lichtquellengruppe 30 und der Linsengruppe 12 ist dafür zu sorgen, dass die LED-Lichtquellengruppe 30 und die Sammellinse 121 mit einem Abstand angebracht werden, dass die Sammellinse 121 und die speziell geformte Linse 122 mit einem Abstand angebracht werden und dass die Sammellinse 121 zwischen der LED-Lichtquellengruppe 30 und der speziell geformten Linse 122 angebracht wird. Die Sammellinse 121 umfasst eine der Aufnahme des von der LED-Lichtquellengruppe 30 kommenden Lichts dienende erste Lichteintrittsfläche 123 sowie eine der Aufnahme des von der ersten Lichteintrittsfläche 123 kommenden Lichts dienende erste Lichtaustrittsfläche 124. Bei der ersten Lichteintrittsfläche 123 handelt es sich um eine Ebene. Handelt es sich bei einer Lichteintrittsfläche um eine Ebene, nimmt diese, abgesehen von der eigenen Veränderung des Lichtwegs entsprechend dem Brechungsgesetz, keine Einstellung des Lichtwegs des austretenden Lichts vor. Bei der ersten Lichtaustrittsfläche 124 handelt es sich um eine Rotationsfläche mit der optischen Achse des Abblendlichts 111 als Mittelachse. Folglich verläuft die optische Achse des Abblendlichts 111 in Lichtaustrittsrichtung der Sammellinse 121 durch die Mittelachse der Sammellinse 121. Bei der Umrisslinie der ersten Lichtaustrittsfläche 124 auf der Querschnittsfläche entlang der optischen Achse des Abblendlichts 111 handelt es sich um einen bezogen auf die Abblendlichtquelle 11 linksgekrümmten Bogen. Die erste Lichtaustrittsfläche 123 nimmt eine erste Einstellung des von der Abblendlichtquelle 11 ausgestrahlten Lichts vor, und da es sich bei der Umrisslinie der ersten Lichtaustrittsfläche 124 um einen bezogen auf die Abblendlichtquelle 11 linksgekrümmten Bogen handelt, bündelt sie das von der Abblendlichtquelle 11 ausgestrahlte Licht, so dass ein gerichtetes Licht entsteht. Für die Vornahme der Einstellung des Bündelungsgrads bedarf es der Mitwirkung der speziell geformten Linse 122, auf die im Folgenden näher eingegangen wird. Da die optische Achse der Fernlichtquelle 31 nicht mit der optischen Achse der Sammellinse 111 übereinstimmt, kann diese keine Bündelung des von der Fernlichtquelle 31 ausgestrahlten Lichts vornehmen, weshalb es sich nur um ein diffuses Licht handelt.

Die speziell geformte Linse 122 umfasst eine der Aufnahme des von der ersten Lichtaustrittsfläche 124 ausgestrahlten Lichts dienende zweite Lichteintrittsfläche 125 sowie eine der Aufnahme des von der zweiten Lichteintrittsfläche 125 ausgestrahlten Lichts dienende zweite Lichtaustrittsfläche 126. Die Umrisslinie der zweiten Lichteintrittsfläche 125 auf der entlang der optischen Achse des Abblendlichts 111 und in vertikaler Richtung zur horizontalen Ebene befindlichen Querschnittsfläche umfasst einen geradlinigen Abschnitt 127 sowie einen mit diesem geradlinigen Abschnitt 127 verbundenen bogenförmigen Abschnitt 128. Die zweite Lichteintrittsfläche 125 wird durch Scannen des geradlinigen Abschnitts 127 und bogenförmigen Abschnitts 128 entlang den zur Anordnungsrichtung des geradlinigen Abschnitts 127 und bogenförmigen Abschnitts 128 sowie den zur von der optischen Achse des Abblendlichts 111 gebildeten Ebene vertikal angeordneten vertikalen Linien gebildet. Daraus folgt auch, dass wenn der geradlinige Abschnitt 127 und bogenförmige Abschnitt 128 entlang den zur Anordnungsrichtung des geradlinigen Abschnitts 127 und bogenförmigen Abschnitts 128 sowie den zur von der optischen Achse des Abblendlichts 111 gebildeten Ebene vertikal angeordneten vertikalen Linien gescannt werden, eine Grenzlinie 129 herausgebildet wird, wobei die Grenzlinie 129 bei der Verwendung parallel zur horizontalen Ebene ist. Es handelt sich bei der Umrisslinie der zweiten Lichtaustrittsfläche 126 auf der entlang der optischen Achse des Abblendlichts 111 und in parallel zur Anordnungsrichtung des geradlinigen Abschnitts 127 und bogenförmigen Abschnitts 128 befindlichen Querschnittsfläche um eine bogenförmige Linie. Die zweite Lichteintrittsfläche 125 wird durch Scannen der bogenförmigen Linie entlang den zur Anordnungsrichtung des geradlinigen Abschnitts 127 und bogenförmigen Abschnitts 128 sowie den zur von der optischen Achse des Abblendlichts 111 gebildeten Ebene vertikal angeordneten vertikalen Linien gebildet. Außerdem dient auf der entlang der optischen Achse des Abblendlichts 111 und in Anordnungsrichtung des geradlinigen Abschnitts 127 und bogenförmigen Abschnitts 128 befindlichen Querschnittsfläche die optische Achse des Abblendlichts 111 der bogenförmigen Linie als Symmetrieachse, wodurch das Einstellen der Menge an austretendem Licht der verschiedenen gebildeten Lichtflecke durch die zweite Lichteintrittsfläche 125 begünstigt wird. Die Form der zweiten Lichtaustrittsfläche 126 wird konkret durch die nachfolgenden Anforderungen festgelegt, nämlich stellen die erste Lichtaustrittsfläche 124 und die dem geradlinigen Abschnitt 127 entsprechende zweite Lichtaustrittsfläche 126 das von der LED-Lichtquellengruppe 30 ausgestrahlte Licht entlang der optischen Achse des Abblendlichts 111 so ein, dass es sich um ein parallel zu der optischen Achse des Abblendlichts 111 verlaufendes gerichtetes Licht handelt, und die erste Lichtaustrittsfläche 124 und die dem bogenförmigen Abschnitt 128 entsprechende zweite Lichtaustrittsfläche 126 stellen das von der Abblendlichtquelle 11 ausgestrahlte Licht so ein, dass es sich um ein von der optischen Achse des Abblendlichts 111 entferntes diffuses Licht handelt. Um die Menge des aus der dem geradlinigen Abschnitt 127 entsprechenden zweiten Lichtaustrittsfläche 126 austretenden Lichts einzustellen, überschneiden sich die optischen Achse des Abblendlichts 111 und der geradlinige Abschnitt 127 und stehen vertikal zueinander.

Wird die Abblendlichtquelle 11 eingeschaltet, befindet sich die durch Scannen des bogenförmigen Abschnitts 128 entstehende zweite Lichteintrittsfläche 125 unterhalb der durch Scannen des geradlinigen Abschnitts 127 entstehenden zweiten Lichteintrittsfläche 125. Folglich ist auf der in Anordnungsrichtung des geradlinigen Abschnitts 127 und bogenförmigen Abschnitts 128 und entlang der optischen Achse des Abblendlichts 111 befindlichen Querschnittsfläche die durch Scannen des bogenförmigen Abschnitts 128 entstehende zweite Lichteintrittsfläche 125 dem Boden zugewandt angebracht, so dass zwei getrennte Lichtflecken entstehen. Und was die Fernlichtquelle 31 betrifft, so nimmt die Sammellinse 121, wenn die Abblendlichtquelle 11 ausgeschaltet ist, da die optische Achse der Fernlichtquelle 31 nicht mit der optischen Achse der Linsengruppe 12 übereinstimmt, folglich keine Bündelung des von der Fernlichtquelle 31 ausgestrahlten Lichts vor, um es zu einem gerichteten Licht zu bündeln, sondern es handelt sich um ein diffuses Licht. Aus diesem Grund kann dieses diffuse Licht in weitere Entfernungen ausgestrahlt werden. Und was die speziell geformte Linse 122 betrifft, so unterteilt diese das gerichtete Licht in zwei getrennte Lichtflecken, nimmt aber für das nicht gerichtete Licht keine Unterteilung in zwei getrennte Lichtflecken vor, so dass ein in weitere Entfernungen ausgestrahlter Lichtfleck entsteht.

Bei dem Lichtumschalter 40 kann es sich um einen Kippschalter handeln. Der Kippschalter sorgt über den Kippschalthebel dafür, dass der Stromkreis geschlossen oder unterbrochen wird, wodurch das Ziel des Schaltkreises erreicht wird. Bei den üblicherweise verwendeten Kippschaltern handelt es sich um einpolige mit zwei Positionen, einpolige mit drei Positionen, zweipolige mit zwei Positionen und zweipolige mit drei Positionen. In diesem Ausführungsbeispiel handelt es sich bei dem Kippschalter um einen einpoligen Schalter mit drei Positionen, bei dem durch Einschalten der Abblendlichtquelle 11 die Fernlichtquelle 31 ausgeschaltet wird, durch Einschalten der Fernlichtquelle 31 die Abblendlichtquelle 11 ausgeschaltet wird und durch Ausschalten des Umschaltens zwischen der Abblendlichtquelle 11 und der Fernlichtquelle 31 das Umschalten zwischen Fernlicht, Abblendlicht und alles ausgeschaltet umgesetzt wird.

Verglichen mit dem aktuellen Stand der Technik verfügt die LED-Lichtquellengruppe 30 der erfindungsgemäßen Fahrradlampe mit Ein-Tasten-Schalter zum Wechseln zwischen Abblend- und Fernlicht über eine Fernlichtquelle 31 und eine Abblendlichtquelle 11 sowie über eine der Einstellung des von der LED-Lichtquellengruppe 30 ausgestrahlten Lichtflecks dienende Linsengruppe 12. Wird die Abblendlichtquelle 11 eingeschaltet, wird das von der Abblendlichtquelle 11 ausgestrahlte Licht zunächst von der Sammellinse 121 gebündelt, wobei die speziell geformte Linse 122 in Lichtaustrittsrichtung der Sammellinse 121 angebracht ist, die zweite Lichteintrittsfläche 125 der speziell geformten Linse 122 in zwei Teile unterteilt ist, diese beiden Teile auf der Querschnittsfläche entlang der optischen Achse des Abblendlichts 111 durch Scannen des geradlinigen Abschnitts 127 und Scannen des bogenförmigen Abschnitts 128 entstehen, gleichzeitig die zweite Lichtaustrittsfläche 126 der speziell geformten Linse 122 durch Scannen einer bogenförmigen Linie entsteht, und die dem geradlinigen Abschnitt 127 entsprechende zweite Lichtaustrittsfläche 126 zusammen mit der ersten Lichtaustrittsfläche 124 der Sammellinse 121 das von der Abblendlichtquelle 11 ausgestrahlte Licht so einstellt, dass es sich um ein gerichtetes Licht handelt. Und die dem bogenförmigen Abschnitt 128 entsprechende zweite Lichtaustrittsfläche 126 stellt zusammen mit der ersten Lichtaustrittsfläche 124 der Sammellinse 121 das von der Abblendlichtquelle 11 ausgestrahlte Licht so ein, dass es entfernt von der optischen Achse des Abblendlichts 111 gestreut wird, wodurch erreicht wird, dass das von der dem geradlinigen Abschnitt 127 entsprechenden zweiten Lichtaustrittsfläche 126 ausgestrahlte gerichtete Licht auf dem Boden einen hellen Lichtfleck bildet, und das von der dem bogenförmigen Abschnitt 128 entsprechenden zweiten Lichtaustrittsfläche 126 ausgestrahlte diffuse Licht auf dem Boden ein Lichtband bildet, so dass die Anforderungen einer Reihe von Ländern an die Lichtfleckstruktur erfüllt werden können. Und wenn die Fernlichtquelle 31 eingeschaltet wird, wird dadurch, dass die Abblendlichtquelle 11 in vertikal zur horizontalen Ebene verlaufender Richtung oberhalb von der Fernlichtquelle 31 angebracht ist, erreicht, dass das von der Fernlichtquelle 31 ausgestrahlte Licht von der Sammellinse 121 nicht vollständig gerichtet wird, und dann das von dieser Fernlichtquelle 31 ausgestrahlte Licht noch einmal durch den bogenförmigen Abschnitt 128 der speziell geformten Linse 122 in die Ferne ausgestrahlt wird, so dass eine Fernlichtlampe entsteht, wodurch diese Fahrradlampe dann sowohl die Vorschriften einer Reihe von Ländern zum Lichtfleck erfüllen als auch die Form eines Fernlichtflecks und eines Abblendlichtflecks realisieren kann.

Bei dem Vorangehenden handelt es sich lediglich um eine bevorzugte Ausführungsform der vorliegenden Erfindung, die keinesfalls dazu dient, den Schutzbereich dieser Erfindung einzuschränken, jedwede innerhalb des Wesens dieser Erfindung vorgenommenen Abänderungen, gleichwertigen Ersetzungen oder Verbesserungen etc. fallen alle in den Geltungsbereich der beiliegenden Ansprüche.

### Bezugszeichenliste

- 1: Fahrradlampe

- 10: Fahrradlampen-Lichtverteilungssystem
- 11: LED-Lichtquelle
- 12: Linsengruppe

- 20: Lampengehäuse
- 21: Außengehäuse
- 22: Innengehäuse

- 30: LED-Lichtquellengruppe
- 31: Fernlichtquelle

- 40: Lichtumschalter

- 111: optische Achse

- 121: Sammellinse
- 122: speziell geformte Linse
- 123: erste Lichteintrittsfläche
- 124: erste Lichteintrittsfläche
- 125: zweite Lichteintrittsfläche
- 126: zweite Lichteintrittsfläche
- 127: geradliniger Abschnitt
- 128: bogenförmiger Abschnitt
- 129: Grenzlinie

## Patentansprüche

1. Fahrradlampen-Lichtverteilungssystem (10) umfassend eine LED-Lichtquelle (11), die eine optische Achse (111) aufweist, und eine im Strahlengang der LED-Lichtquelle (11) angeordnete Linsengruppe (12) mit einer Sammellinse (121) und einer in Lichtaustrittsrichtung der Sammellinse (121) angeordnete speziell geformte Linse (122), wobei die Sammellinse (121) eine erste Lichteintrittsfläche (123) und eine erste Lichtaustrittsfläche (124) aufweist, wobei die speziell geformte Linse (122) eine zweite Lichteintrittsfläche (125) und eine zweite Lichtaustrittsfläche (126) aufweist, wobei die Umrisslinie der zweiten Lichteintrittsfläche (125) auf einer der Querschnittsflächen entlang der optischen Achse (111) einen geradlinigen Abschnitt (127) sowie einen mit diesem geradlinigen Abschnitt (127) verbundenen bogenförmigen Abschnitt (128) umfasst, wobei die erste Lichtaustrittsfläche (124) und die dem geradlinigen Abschnitt (127) entsprechende zweite Lichtaustrittsfläche (126) das von der LED-Lichtquelle (11) ausgestrahlte Licht so einstellen, dass es sich um ein parallel zu der optischen Achse (111) verlaufendes gerichtetes Licht handelt, und wobei die erste Lichtaustrittsfläche (124) und die dem bogenförmigen Abschnitt (128) entsprechende zweite Lichtaustrittsfläche (126) das von der LED-Lichtquelle (11) ausgestrahlte Licht so einstellen, dass es sich um ein von der optischen Achse (111) entferntes diffuses Licht handelt.

2. Fahrradlampen-Lichtverteilungssystem (10) nach Anspruch 1, **dadurch gekennzeichnet, dass** es sich bei der ersten Lichtaustrittsfläche (124) um eine Rotationsfläche mit der optischen Achse (111) als Mittelachse handelt, dass es sich bei der Umrisslinie der ersten Lichtaustrittsfläche (124) auf der Querschnittsfläche entlang der Mittelachse um einen bezogen auf die Lichtquelle (11) linksgekrümmten Bogen handelt, dass die zweite Lichteintrittsfläche (125) durch Scannen des geradlinigen Abschnitts (127) und des bogenförmigen Abschnitts (128) entlang den zur Anordnungsrichtung des geradlinigen Abschnitts (127) und des bogenförmigen Abschnitts (128) sowie den zur von der optischen Achse (111) gebildeten Ebene vertikal angeordneten vertikalen Linien gebildet wird, dass es sich bei der Umrisslinie der zweiten Lichtaustrittsfläche (126) auf der entlang der optischen Achse (111) und in parallel zur Anordnungsrichtung des geradlinigen Abschnitts (127) und bogenförmigen Abschnitts (128) befindlichen Querschnittsfläche um eine bogenförmige Linie handelt, dass die zweite Lichtaustrittsfläche (126) durch Scannen der bogenförmigen Linie entlang den zur Anordnungsrichtung des geradlinigen Abschnitts (127) und bogenförmigen Abschnitts (128) sowie den zur von der optischen Achse (111) gebildeten Ebene vertikal angeordneten vertikalen Linien gebildet wird, dass die erste Lichtaustrittsfläche (124) und die dem geradlinigen Abschnitt (127) entsprechende zweite Lichtaustrittsfläche (126) in Richtung der optischen Achse (111) das von der LED-Lichtquelle (11) ausgestrahlte Licht so einstellen, dass es sich um ein parallel zu der optischen Achse (111) verlaufendes gerichtetes Licht handelt, und dass die erste Lichtaustrittsfläche (124) und die dem bogenförmigen Abschnitt (128) entsprechende zweite Lichtaustrittsfläche (126) das von der LED-Lichtquelle (11) ausgestrahlte Licht so einstellen, dass es sich um ein von der optischen Achse (111) entferntes diffuses Licht handelt.

3. Fahrradlampen-Lichtverteilungssystem (10) nach Anspruch 1 oder 2, **dadurch gekennzeichnet, dass** sich die optische Achse (111) und der geradlinige Abschnitt (127) überschneiden und vertikal zueinander stehen.

4. Fahrradlampen-Lichtverteilungssystem (10) nach einem der vorhergehenden Ansprüche, **dadurch gekennzeichnet, dass** die LED-Lichtquelle (11) und die Sammellinse (121) mit einem Abstand angeordnet sind, dass die Sammellinse (121) und die speziell geformte Linse (122) mit einem Abstand angeordnet sind, und dass die Sammellinse (121) zwischen der LED-Lichtquelle (11) und der speziell geformten Linse (122) angeordnet ist.

5. Fahrradlampen-Lichtverteilungssystem (10) nach einem der vorhergehenden Ansprüche, **dadurch gekennzeichnet, dass**, wenn der geradlinige Abschnitt (127) und der bogenförmige Abschnitt (128) entlang den zur Anordnungsrichtung des geradlinigen Abschnitts (127) und bogenförmigen Abschnitts (128) sowie den zur von der optischen Achse (111) gebildeten Ebene vertikal angeordneten vertikalen Linien gescannt werden, eine Grenzlinie (129) herausgebildet wird, wobei die Grenzlinie (129) bei der Verwendung parallel zur horizontalen Ebene ist.

6. Fahrradlampen-Lichtverteilungssystem (10) nach einem der vorhergehenden Ansprüche, **dadurch gekennzeichnet, dass** sich bei der Verwendung die durch Scannen des bogenförmigen Abschnitts (128) entstehende zweite Lichteintrittsfläche (125) unterhalb der durch Scannen des geradlinigen Abschnitts (127) entstehenden zweiten Lichteintrittsfläche (125) befindet.

7. Fahrradlampen-Lichtverteilungssystem (10) nach einem der vorhergehenden Ansprüche, **dadurch gekennzeichnet, dass** auf der entlang der optischen Achse (111) und in Anordnungsrichtung des geradlinigen Abschnitts (127) und bogenförmigen Abschnitts (128) befindlichen Querschnittsfläche die optische Achse (111) der bogenförmigen Linie als Symmetrieachse dient.

8. Fahrradlampen-Lichtverteilungssystem (10) nach einem der vorhergehenden Ansprüche, **dadurch gekennzeichnet, dass** die optische Achse (111) in Lichtaustrittsrichtung der Sammellinse (121) durch die Mittelachse der Sammellinse (121) verläuft.

9. Fahrradlampen-Lichtverteilungssystem (10) nach einem der vorhergehenden Ansprüche, **dadurch gekennzeichnet, dass** es sich bei der ersten Lichteintrittsfläche (123) um eine Ebene handelt.

10. Fahrradlampen-Lichtverteilungssystem (10) nach einem der vorhergehenden Ansprüche, **dadurch gekennzeichnet, dass** eine Lichtquellengruppe (30) vorgesehen ist, in deren Strahlengang die Linsengruppe (12) angeordnet ist, die LED-Lichtquellengruppe (30) die LED-Lichtquelle (11) als Abblendlichtquelle und eine weitere LED-Lichtquelle als Fernlichtquelle (31) aufweist, die Abblendlichtquelle (11) in vertikal zur horizontalen Ebene verlaufender Richtung oberhalb von der Fernlichtquelle (31) angebracht ist und ein Ein-Tasten-Schalter zum Wechseln zwischen Abblend- und Fernlicht vorgesehen ist, wobei, wenn nur die Abblendlichtquelle (11) eingeschaltet wird, die erste Lichtaustrittsfläche (124) und die dem geradlinigen Abschnitt (127) entsprechende zweite Lichtaustrittsfläche (126) das von der LED-Lichtquellengruppe (30) ausgestrahlte Licht entlang der optischen Achse (111) des Abblendlichts (11) so einstellen, dass es sich um ein parallel zu der optischen Achse (111) des Abblendlichts (11) verlaufendes gerichtetes Licht handelt, und die erste Lichtaustrittsfläche (124) und die dem bogenförmigen Abschnitt (128) entsprechende zweite Lichtaustrittsfläche (126) das von der Abblendlichtquelle (11) ausgestrahlte Licht so einstellen, dass es sich um ein von der optischen Achse (111) entferntes diffuses Licht handelt, wobei, wenn nur die Fernlichtquelle (31) eingeschaltet wird, die Sammellinse (121) und die speziell geformte Linse (122) beide das von der Fernlichtquelle (31) ausgestrahlte Licht streuen und in die Ferne strahlen.

11. Fahrradlampen-Lichtverteilungssystem (10) nach Anspruch 10, **dadurch gekennzeichnet, dass** die Fernlichtquelle (31) einen LED-Chip oder mehrere LED-Chips umfasst.

12. Fahrradlampen-Lichtverteilungssystem (10) nach Anspruch 10, **dadurch gekennzeichnet, dass** die Fernlichtquelle (31) mehrere LED-Chips umfasst und die Anordnungsrichtung dieser mehreren LED-Chips parallel zur horizontalen Ebene ist.

13. Fahrradlampen-Lichtverteilungssystem (10) nach einem der Ansprüche 10 bis 12, **dadurch gekennzeichnet, dass** dieses einen Lichtumschalter (40) umfasst, wobei der Lichtumschalter (40) dazu dient, die Fernlichtquelle (31) oder die Abblendlichtquelle (11) einzuschalten beziehungsweise die Fernlichtquelle (31) und die Abblendlichtquelle (11) auszuschalten.

14. Fahrradlampe (1), **dadurch gekennzeichnet, dass** die Fahrradlampe ein Fahrradlampen-Lichtverteilungssystem (10) nach einem der vorhergehenden Ansprüche sowie ein dem Einbau des Fahrradlampen-Lichtverteilungssystems (10) dienendes Lampengehäuse (20) umfasst, wobei das Lampengehäuse (20) ein Außengehäuse (21) sowie ein in dem Au-ßengehäuse (21) angebrachtes Innengehäuse (22) umfasst, die speziell geformte Linse (122) an dem Außengehäuse (21) angebracht ist und die Lichtquelle (11) oder die Lichtquellen (11, 31) und die Sammellinse (121) an dem Innengehäuse (22) angebracht sind.

15. Fahrradlampe (1) nach Anspruch 14, **dadurch gekennzeichnet, dass** auf der in Anordnungsrichtung des geradlinigen Abschnitts (127) und bogenförmigen Abschnitts (128) und entlang der optischen Achse (111) befindlichen Querschnittsfläche die durch Scannen des bogenförmigen Abschnitts entstehende erste Lichteintrittsfläche (123) dem Boden zugewandt angebracht ist.
